# EUROPEAN PATENT APPLICATION

(11) **EP 1 178 480 A2**
(43) Date of publication of application: **06.02.2002**
(21) Application number: 01117346.5
(22) Date of filing: 18.07.2001
(51) Int. Cl.: G11B 15/295, G11B 15/20, G11B 15/22

(54) **Process for controlling the capstan in a video tape recorder (VTR)**

(30) Priority: 28.07.2000 EP 00402169
(71) Applicant: Thomson Licensing S.A., 92100 Boulogne-Billancourt (FR)
(72) Inventor: Kwok, Kwong Heng, Singapore 730357 (SG)
(74) Representative: Bonnans, Arnaud

(57) **Abstract**

In a video tape recorder (VTR) (2), the capstan (10) draws the tape (6) from which the video signal is reproduced in a forward direction. Following steps are proposed to control the capstan (10):
- applying a torque to the capstan (10) in a backward direction for a first predetermined period of time ;
- applying a torque to the capstan (10) in the forward direction for a second predetermined period of time ;
- nullifying the motor current.

This is particularly convenient for slow-motion and still-picture reproduction modes.

## Description

The invention relates to a process for controlling the capstan in a video tape recorder (VTR).

In a video tape recorder (VTR), the tape is drawn by a capstan driven by a capstan motor. For slow-motion reproduction or still-picture reproduction, the tape needs to be stopped accurately so that the magnetic heads on the rotating drum are in correspondance with the track where the image is recorded on the tape, as described for instance in EP 0 849 730 A2.

In order to stop the motion of the capstan (and thus the tape), it has already been proposed, for instance in US 4 670 694 to reverse the control direction of the capstan in a first step and to set to zero the current in the motor in a second step.

However, this solution has not proved sufficiently accurate, notably because the capstan could continue turning backwards by inertia from the first step.

In order to solve this problem, the invention proposes a process for controlling a capstan in a video tape recorder, the capstan being able to rotate driven by a motor in a forward direction to draw a tape from which a video signal is reproduced, including the following successive steps :
- applying a torque to the capstan in a backward direction for a first predetermined period of time ;
- applying a torque to the capstan in the forward direction for a second predetermined period of time ;
- nullifying the motor current.

Possible advantageous features of the invention follow :
- the first period of time lasts longer than 5 times the second period of time ;
- the second period of time lasts between 0.5 ms and 5 ms ;
- the second period of time lasts between 1 ms and 2 ms ;
- the first period of time lasts between 5 ms and 25 ms ;
- the first period of time lasts between 12 ms and 16 ms ;
- the motor is controlled by a control current and a control rotation direction, the control current is strictly positive during the first period of time and during the second period of time, the control rotation direction is set backward during the first period of time and the control rotation direction is set forward during the second period of time ;
- the motor is fed by a drive current, the drive current is not null and has a first given sign during the first period of time and the drive current is not null and has a second sign opposite said first sign during the second period of time.

The invention thus proposes a process for controlling a capstan in a video tape recorder, the capstan being driven by a motor and drawing a tape from which a video signal is reproduced, including the following successive steps :
- rotating the torque in a first direction ;
- applying a torque to the capstan in a second direction oppposite the first direction for a first predetermined period of time ;
- applying a torque to the capstan in the first direction for a second predetermined period of time ;
- nullifying the motor current.

Preferably, the torque is applied in the second direction when a predetermined period of time has elapsed after a control pulse is detected by a control pulse sensor. According to this last solution, the steps can be described as follows :
- rotating the capstan in a first direction ;
- when a first predetermined period of time has elapsed after a control pulse is detected by the control pulse sensor, applying a torque to the capstan in a second direction oppposite the first direction for a second predetermined period of time ;
- applying a torque to the capstan in the first direction for a third predetermined period of time ;
- nullifying the motor current.

The invention and other features thereof will be better understood in the light of the following description made with reference to the attached drawings wherein :
- figure 1 represents schematically the main elements of a video tape recorder;
- figure 2 is a diagram of a circuit used by the invention ;
- figures 3a to 3d are diagrams representing the signals at various portions of the circuit of figure 2 during a step in slow-motion reproduction.

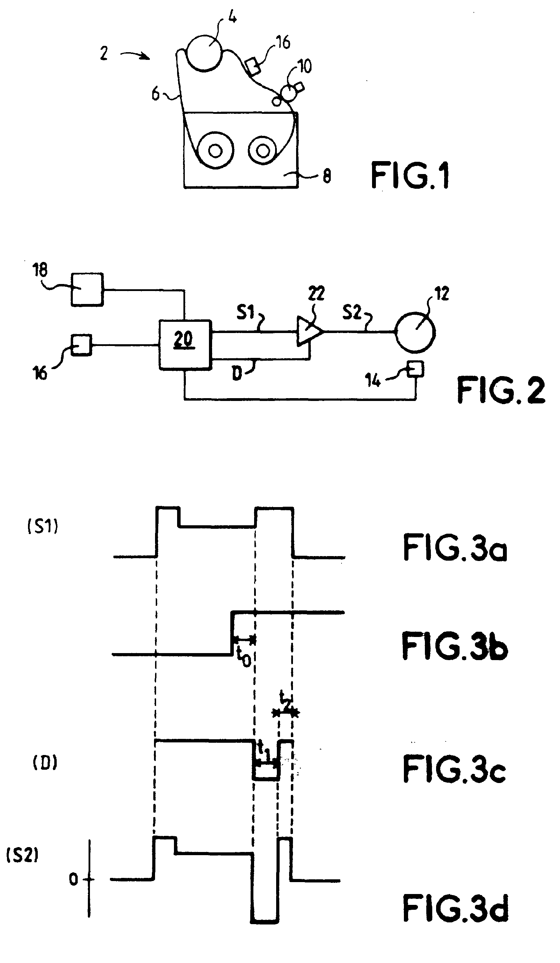

Figure 1 represents a video tape recorder (VTR) 2 comprising a rotating drum 4 carrying magnetic heads to read a magnetic signal recorded on slanted tracks on a tape 6. The tape 6 is carried in a cassette 8 which is inserted in the VTR 2.

A capstan 10 draw the tape 6 during reproduction modes. The capstan 10 is driven by a motor 12 and its motion is measured by a capstan sensor 14 generating pulses (called FG pulses) with a frequency increasing with the rotation speed of the capstan 10.

A control pulse sensor 16 is also provided. The control pulse sensor 16 detects control pulses which are recorded on the tape (during a previous recording mode) in order to indicate the position of the tracks on the tape during reproduction.

Based on instructions from the user received through a user interface circuit 18 (for instance an infrared receiver detecting instructions from a remote-controller), a control circuit 20 sends operating instructions to the capstan motor 12 on a first wire S1 representing the control current of the motor 12 and on a second wire D representing the control rotation direction of the motor 12 (see figure 2).

These control current and control rotation direction are combined in an amplifier 22 to form a drive current on a wire S2 which generates a torque (or rotational acceleration) in the motor 12.

It is important to note that the control rotation direction represents the direction of the torque generated by the motor and not directly the direction of rotation of the motor. Of course, if the same control rotation direction is applied for a period of time, the direction of rotation of the motor will follow the control rotation direction.

As can be seen from figure 2, the VTR 2 includes a single capstan sensor 14 (which allows a cost reduction compared to known systems with two 90° -phase-shifted capstan sensors) and is consequently unable to detect the rotation direction of the capstan 10 nor a change in the rotation direction.

The control circuit 20 receives the control pulses signal from the control pulse sensor 16 in order to locate the tracks on the tape 6 and to stop the tape at a correction location as will now be described.

Figure 3a and 3c respectively represent the control current voltages at wire S1 and the control rotation direction at wire D during a step in slow-motion mode reproduction. This step allows the tape 6 to be drawn from one track to the next at the level of the drum 4. The tape is then stopped for a while (the same image being displayed) before the next step.

Just before the step, the tape is still ; the control current is null (command : 0 V on wire S1).

When the step is initiated by the control circuit 20, the control rotation direction (wire D) is set forward (high level - 5 V - on figure 3c) with a strictly positive control current (command : 4 V then 2 V on wire S1). This result in a strictly positive drive current (wire S2) as represented on figure 3d. The capstan motor 12 (and the capstan 10) starts to move and moves forward for a while.

As a possibility and as represented on figure 3a, the control current (wire S1) is higher (command : 4 V) at the very beginning of the motion of the capstan motor 12 in order to reach the aimed speed more quickly.

When a control pulse is detected from control pulse sensor 16 (see rising edge - 0 V to 5 V - of signal from the control pulse sensor 16 on figure 3b), the control circuit 20 waits for a period of time t0 - for instance 18 ms - (during which the controls to the capstan motor 12 are unchanged) and starts a stopping phase (which can also be called braking phase or slow-down phase).

The stopping phase comprises successively a first period of time t1 and a second period of time t2, for instance of respectively 14 ms and 2 ms. The duration of each period of time is predetermined and can be recorded for instance in a memory of the VTR.

During the first period of time t1, the control circuit 20 sends the following instruction to the motor 12 : control rotation direction is set backward (low level - 0 V - on figure 3c) with a strictly positive control current (command : 3.5 V on wire S1). This results in a negative drive current (see figure 3d) and thus in a torque in the backward direction which acts as a brake on the capstan 10.

During the second period of time t2, the control circuit 20 sends the following instruction to the motor 12 : control rotation direction is set forward (high level - 5V - on figure 3c) with a strictly positive control current (wire S1) - which can be the same as during the first period of time, as represented on figure 3a, but not necessarily. This results in a sudden positive drive current (see figure 3c) and thus in a torque in the forward direction which, after the first period of time t1, allows to stop the motor 12 and thus the capstan 10 accurately.

Notably, this prevents the motor 12 from turning backwards from the first period of time t1. It should be noted that this advantage is of the uttermost importance as the single capstan sensor 14 cannot detect the rotation direction of the capstan 10.

Once the second period of time t2 has elapsed, the control current is set to zero, so that the capstan 10 rests. (When the control current is null, there is no need to indicate the control rotation direction ; for instance it can stay forward - high level.) The control circuit 20 stays idle waiting for the next step.

Of course, the invention is not limited to the embodiment described above. For instance, though the above description relates to slow-motion reproduction, the invention also applies to the stopping phase of a still-picture reproduction mode.

Similarly, the direction mentioned as forward is the rotation direction before the stopping phase is initiated, but does not necessarily relate to the evolution of the video sequence : this process can notably be used for so-called reverse slow-motion. Of course, in this last case, the voltages at wire D are inverted compared with the example described above.

## Claims

1. Process for controlling a capstan (10) in a video tape recorder (2), the capstan (10) being able to rotate driven by a motor (12) in a forward direction to draw a tape (6) from which a video signal is reproduced, **characterised by** the following successive steps :
- applying a torque to the capstan (10) in a backward direction for a first predetermined period of time (t1);
- applying a torque to the capstan (10) in the forward direction for a second predetermined period of time (t2) ;
- nullifying the motor current.

2. Process for controlling a capstan (10) in a video tape recorder (2), the capstan (10) being driven by a motor (12) and drawing a tape (6) from which a video signal is reproduced, **characterised by** the following successive steps :
- rotating the capstan (10) in a first direction ;
- applying a torque to the capstan (10) in a second direction oppposite the first direction for a first predetermined period of time (t1);
- applying a torque to the capstan (10) in the first direction for a second predetermined period of time (t2);
- nullifying the motor current.

3. Process according to claim 1 or 2, wherein the first period of time (t1) lasts longer than 5 times the second period of time (t2).

4. Process according to any of claims 1 to 3, wherein the second period of time (t2) lasts between 0.5 ms and 5 ms.

5. Process according to any of claims 1 to 3, wherein the second period of time (t2) lasts between 1 ms and 2 ms.

6. Process according to any of claims 1 to 5, wherein the first period of time (t1) lasts between 5 ms and 25 ms.

7. Process according to any of claims 1 to 5, wherein the first period of time (t1) lasts between 12 ms and 16 ms.

8. Process according to any of claims 1 to 7, wherein the motor (12) is controlled by a control current (S1) and a control rotation direction (D) and wherein :
- the control current (S1) is strictly positive during the first period of time (t1) and during the second period of time (t2) ;
- the control rotation direction (D) is set backward during the first period of time (t1) ;
- the control rotation direction (D) is set forward during the second period of time (t2).

9. Process according to any of claims 1 to 7, wherein the motor (12) is fed by a drive current (S2) and wherein :
- the drive current (S2) is not null and has a first given sign during the first period of time (t1) ;
- the drive current (S2) is not null and has a second sign opposite said first sign during the second period of time (t2).

10. Process for controlling a capstan (10) in a video tape recorder (2), the capstan (10) being driven by a motor (12) and drawing a tape (6) from which a video signal is reproduced, a control pulse sensor (16) detecting control pulses of the tape (6), **characterised by** the following successive steps :
- rotating the capstan (10) in a first direction ;
- when a first predetermined period of time (t0) has elapsed after a control pulse is detected by the control pulse sensor (16), applying a torque to the capstan (10) in a second direction oppposite the first direction for a second predetermined period of time (t1) ;
- applying a torque to the capstan (10) in the first direction for a third predetermined period of time (t2);
- nullifying the motor current.
